# EUROPÄISCHE PATENTANMELDUNG

(11) **EP 1 288 802 A1**
(43) Veröffentlichungstag der Anmeldung: **05.03.2003**
(21) Anmeldenummer: 01120827.9
(22) Anmeldetag: 29.08.2001
(51) Int. Cl.: G06F 17/60

(54) **System und Verfahren zum Betreiben von Informationsterminals, wobei Werbespots eingespielt werden**

(71) Anmelder: SONOPRESS PRODUKTIONSGESELLSCHAFT FÜR TON- UND INFORMATIONSTRÄGER mbH, 33332 Gütersloh (DE)
(72) Erfinder: Müller, Andreas, 3330 Gütersloh (DE)
(74) Vertreter: Schaumburg, Thoenes & Thurn

(57) **Zusammenfassung**

Beschrieben wird ein System und Verfahren zum Betreiben von Informationsterminals, bei dem ein Systemnutzer eine Vielzahl von Informationsterminals (12, 14) für Kunden bereitstellt. Jedes Informationsterminal (12, 14) hat eine Abtastvorrichtung (18), die eine auf einem Datenträger-Produkt angebrachte Produktkennzeichnung abtastet. Eine vom Systemnutzer entfernte Zentrale (26) hat eine zentrale Datenverarbeitungsanlage (30), die mit einer lokalen Steuerung (20) verbindbar ist und die die zur Wiedergabe bestimmten Informationen aus einem Archiv (32) liefert. Es werden Daten für mindestens einen Werbespot bereitgestellt, der an der Wiedergabestation (16) des Informationsterminals (12, 14) an den Kunden zusätzlich zur Information über das Datenträger-Produkt ausgegeben wird.

## Beschreibung

Die Erfindung betrifft ein System zum Betreiben von Informationsterminals, bei dem ein Systemnutzer eine Vielzahl von Informationsterminals für Kunden bereitstellt. Jedes Informationsterminal hat eine Wiedergabestation zur akustischen und/oder optischen Wiedergabe mindestens eines Teils von Informationen, die auf einem zum Kauf bestimmten Datenträger-Produkt, z.B. einer CD (Compact Disc mit Audiosignalen), einer DVD (Digital Versatile Disc mit Audio- und Videoinformationen) oder ein Computerspiel (z.B. eine CD-ROM mit Software-, Audio- und Videodaten), gespeichert sind. An jedem Informationsterminal ist eine Abtastvorrichtung angebracht, die eine auf dem Datenträger-Produkt angebrachte Produktkennzeichnung abtastet.

Ein derartiges System ist aus der DE 299 14 175 U1 derselben Anmelderin unter dem Namen "Music Browser" bekannt. Beim Systemnutzer ist eine lokale Datenverarbeitungsanlage installiert. Mithilfe der abgetasteten Produktkennzeichnung, die beispielsweise als Barcode auf der Verpackung einer CD angebracht ist, werden von einer lokalen Datenbank für den Kunden bestimmte Informationen, beispielsweise Music-Clips, Video-Clips oder Computerspiele-Clips abgerufen, die diese Wiedergabestation an den Kunden abgibt. Diese Informationen werden der lokalen Datenverarbeitungsanlage von einer entfernt angeordneten Zentrale übermittelt. Diese Zentrale enthält in einem Archiv eine Vielzahl derartiger Music-Clips, Video-Clips oder Computerspiele-Clips, d.h. identische oder ähnliche Daten einer Vielzahl von Datenträger-Produkten, wobei diese Daten geeignet sind, dem Kunden einen guten Eindruck und einen Überblick über das jeweilige Datenträger-Produkt zu geben. Mithilfe der Zentrale kann der Systemnutzer seine lokale Datenbank aktualisieren. In dem zentralen Archiv können bis zu mehrere Millionen Stücke von Datenträger-Produkten bereitgehalten werden, aus dem eine Vielzahl von Systemnutzern die erforderlichen Informationen erhalten.

Auf diese Weise kann ein Kunde eine CD oder eine DVD oder CD-ROM zur Probe anhören bzw. ansehen und wird für seine Kaufentscheidung positiv beeinflußt. Die CD oder DVD muß nicht selbst aus der Verpackung genommen werden, sondern kann über die lokale Datenverarbeitungsanlage aus der lokalen Datenbank abgerufen werden. Die Wiedergabestation mit der Abtastvorrichtung kann vom Kunden selbst bedient werden. Auf diese Weise wird das probehafte Abspielen von CDs oder DVDs in einem Verkaufsgeschäft automatisiert. Die vorgenannte DE 299 14 175 U1 wird hiermit durch Bezugnahme in den Offenbarungsgehalt der vorliegenden Patentanmeldung einbezogen.

Aus der EP 0 969 469 A1 derselben Anmelderin ist ein Verfahren zum Bereitstellen von Musikstücken bekannt, bei dem die Informationen über ein Datenträgerprodukt, z.B. eine CD oder DVD, von einer Zentrale im Online-Betrieb an die lokale Datenverarbeitungsanlage und lokale Datenbank übermittelt wird. Eine Wiedergabestation gibt zumindest einen Teil der auf der CD oder DVD gespeicherten Information zum Probehören und Probesehen ab. Die vorgenannte EP 0 969 469 A1 wird hiermit durch Bezugnahme in den Offenbarungsgehalt der vorliegenden Patentanmeldung einbezogen.

Ferner ist in der WO 98/02885 derselben Anmelderin ein Archiv in Form einer Datenbank beschrieben. In diesem Archiv kann eine Vielzahl von Stücken von Datenträgerprodukten gespeichert werden. Auch diese Publikation wird hiermit in den Inhalt der vorliegenden Patentanmeldung einbezogen.

Es ist Aufgabe der Erfindung, ein System und ein Verfahren zum Betreiben von Informationsterminals anzugeben, das den Komfort für den Kunden erhöht und zusätzliche Informationen bereitstellt und dem Systemnutzer wirtschaftliche Vorteile bringt.

Diese Aufgabe wird für ein System eingangs genannter Art dadurch gelöst, daß für die lokale Steuerung Daten für mindestens einen Werbespot bereitgestellt werden, der an der Wiedergabestation des Informationsterminals an den Kunden zusätzlich zur Information über das Datenträger-Produkt ausgegeben wird. Der Werbespot kann akustische und/oder optische Informationen enthalten.

Gemäß der Erfindung wird die Wiedergabestation zweifach genutzt, nämlich einerseits zum Probehören bzw. Probesehen von Datenträger-Produkten und andererseits zur Information des Kunden mithilfe von Werbespots. Auf diese Weise werden die technischen Anlagen beim Systemnutzer zur Unterstützung des Verkaufs und zur Erhöhung des Komforts für den Kunden noch besser genutzt. In der Praxis hat sich gezeigt, daß die Informationsterminals in einem Verkaufsladen von den Kunden in einem hohen Maße akzeptiert und zum Probehören bzw. Probesehen verwendet werden. Ein derartiges Informationsterminal ist hoch frequentiert und damit besonders geeignet, ohne Belästigung des Kunden bei einem direkten Ansprechen durch Verkaufspersonal diesen weiter zu informieren.

Der Systemnutzer ist z.B. ein Handelsunternehmen, gegebenenfalls mit mehreren Filialen, das mit dem Systembetreiber, der zumindest die Zentrale betreibt, in enger Datenverbindung steht. Vorzugsweise wird der Datenverkehr zwischen der lokalen Stseuerung und der zentralen Datenverarbeitung via IP-Netzwerk (Internet-Protokoll) über das weltweite Internet abgewickelt.

Die erforderlichen Werbespots können bei einem Ausführungsbeispiel der Erfindung durch den Systemnutzer in einer lokalen Datenbank abgelegt sein. In diesem Falle hat der Systemnutzer selbst für die Aufbereitung des Werbespots und die softwaretechnische Verwaltung des Werbespots zu sorgen.

Eine bevorzugte Variante sieht vor, daß die Zentrale eine Werbespot-Datenbank bereitstellt, in der eine Vielzahl von Werbespots gespeichert sind, wobei der Systemnutzer mindestens einen Werbespot auswählt, der z.B. der lokalen Datenbank übermittelt und von der Wiedergabestation ausgegeben wird. Bei dieser Variante werden die Werbespots bzw. die Daten hierfür in der Zentrale aufbereitet und softwaretechnisch verwaltet. Auf diese Weise können verschiedene Systemnutzer Vorteile aus der zentralen Werbespot-Datenbank ziehen. Eventuell ist es auch möglich, daß verschiedene Systemnutzer denselben Werbespot aus der Werbespot-Datenbank abrufen. Die gemeinsame Verwaltung der Werbespots für unterschiedliche Systemnutzer erhöht ferner die Wirtschaftlichkeit.

Eine besondere Ausführungsform der Erfindung sieht vor, daß die von der Abtastvorrichtung, welche die auf dem Datenträger-Produkt angebrachte Produktkennzeichnung, beispielsweise in Form eines Barcodes, ermittelten Daten statistisch ausgewertet werden. Diese Auswertung kann z.B. in der lokalen Datenverarbeitungsanlage erfolgen. Vorzugsweise wird die Statistik jedoch in der zentralen Datenverarbeitungsanlage erstellt. Der Systemnutzer kann dann die statistischen Daten über die zentrale Datenverarbeitungsanlage abrufen. Mithilfe der statistischen Daten wird der Systemnutzer über das Verhalten der Kunden informiert. Beispielsweise kann die Statistik die Häufigkeit abgetasteter Datenträger-Produkte wiedergeben. Aufgrund dieser Häufigkeit, mit der Kunden auf ein bestimmtes Datenträger-Produkt zugreifen, kann der Systemnutzer sehr schnell herausfinden, welche Datenträger-Produkte besonders nachgefragt werden. Auf diese Weise kann er seinen Lagerbestand optimieren und die Wirtschaftlichkeit verbessern. Beispielsweise kann die Statistik auch eine Rangliste der verschiedenen angebotenen Datenträger-Produkte wiedergeben. Eine solche Rangliste kann pro Tag oder pro Woche und/oder je Informationsterminal oder Gruppen von Informationsterminals erstellt werden. Der Systemnutzer kann aufgrund der Rangliste das Kundenverhalten feststellen und entsprechend disponieren.

Gemäß einem weiteren Ausführungsbeispiel hat das Informationsterminal einen Produktpräsentationsbereich, welcher im Zugriffsbereich des Kunden bei der Wiedergabe der akustischen und/oder optischen Informationen auf der Wiedergabestation liegt. Im Produktpräsentationsbereich wird mindestens ein zum Kauf bestimmtes Produkt präsentiert. Das Informationsterminal wird durch den Kunden selbst bedient. Beipielsweise beim Probehören einer CD setzt der Kunde den Kopfhörer auf, stellt die gewünschte Lautstärke ein und hört die Musik. Während des Abhörens der Musik bleibt er am Ort des Informationsterminals stehen und läßt seine Augen schweifen. Wenn nun im Zugriffsbereich des Kunden ein Produkt präsentiert wird, so fällt dieses Produkt dem Kunden zwangsläufig besonders auf. Diese Aufmerksamkeit kann dazu führen, daß er sich für dieses Produkt näher interessiert. Das Produkt muß nicht unbedingt ein Datenträger-Produkt sein, beispielsweise können auch andere Kleingeräte oder sogar nur Modelle davon präsentiert werden. Vorzugsweise ist das präsentierte Produkt jedoch ein aktuelles und besonders ein breites Publikum interessierendes Produkt.

Besonders vorteilhaft ist es, wenn der von der Wiedergabestation wiedergegebene Werbespot, der zusätzlich zur Information über das vom Kunden ausgewählte Datenträger-Produkt ausgegeben wird, das im Produktpräsentationsbereich präsentierte Produkt betrifft. Dieses Datenträger-Produkt kann beispielsweise ein auf einer Hitliste weit oben stehendes Stück sein oder es kann aufgrund anderer Marketing-Überlegungen präsentiert werden. Der Kunde wird also zusätzlich durch den Werbespot über das im Produktpräsentationsbereich befindliche Datenträger-Produkt informiert und seine Neugierde wird weiter geweckt.

Eine Weiterentwicklung des Systems sieht vor, daß der Systemnutzer das an einem oder mehreren Informationsterminals im jeweiligen Produktpräsentationsbereich zu präsentierende Datenträger-Produkt abhängig von den ermittelten statistischen Daten auswählt. Wird z.B. im Ladengeschäft eines Systemnutzers ein bestimmtes Datenträger-Produkt nur wenig nachgefragt, während er von der Wettbewerbsbeobachtung her weiß, daß dieses Datenträger-Produkt beim Publikum sehr beliebt ist, so kann er, um die Nachfrage in seinem Ladengeschäft zu erhöhen, ein derartiges Datenträger-Produkt für den Produktpräsentationsbereich auswählen und verstärkt dadurch die Nachfrage.

Eine andere Weiterbildung kann vorsehen, daß statistische Daten an ausgewählten Informationsterminals ermittelt werden, beispielsweise an Test-Informationsterminals, die eine besondere Marktstellung haben. In Verkaufsläden oder auch in bestimmten Fillialen kann an bestimmten Informationsterminals ein Publikum verfügbar sein, das besonders sensitiv für neue Produkte ist. Durch Beobachtung dieses Publikums und dessen Nachfrageverhaltens kann ein Verkaufstrend ermittelt werden. Die statistischen Daten derartiger Test-Informationsterminals können dann dazu verwendet werden, um das Verkaufsverhalten breiterer Publikumsschichten mit beeinflussen. Beispielsweise ist es denkbar, daß derartige Informationsterminals in Verkaufsläden mit trendsetzendem Charakter aufgestellt werden. In Verkaufsläden mit mehr provinziellem Charakter und entsprechendem Publikum werden dann diejenigen Datenträger-Produkte durch Werbespots und Produktpräsentation beworben, die durch das Publikum mit trendsetzendemVerhalten bevorzugt ausgewählt worden sind.

Besonders vorteilhaft kann das System angewendet werden, wenn der Systemnutzer in mehreren örtlich voneinander entfernten Fillialen Informationsterminals verwaltet. Jedes Informationsterminal kann über die zentrale Datenverarbeitungsanlage ansteuerbar sein. Der Systemnutzer kann dann durch Zugriff auf die zentrale Datenverarbeitungsanlage die Einspielung von Werbespots steuern. Außerdem kann der Systemnutzer durch Zugriff auf die zentrale Datenverarbeitungsanlage die Präsentation von Produkten im Produktpräsentationsbereich steuern. Auf diese Weise kann ein Systemnutzer die Nachfrage in seinen Verkaufsläden verbessern und seine Marktstrategie optimieren. Auch können mehrere Informationsterminals zu einer Gruppe zusammengefaßt werden. Diese Informationsterminals werden dann innerhalb der Gruppe, vorzugsweise über das Internet, gleichartig gesteuert und ausgewertet.

Gemäß einem Ausführungsbeispiel ist das System dadurch gekennzeichnet, daß die zentrale Datenverarbeitungsanlage ein Internetportal umfaßt, wobei der Systemnutzer via Internet mithilfe einer ihn identifizierende Zugriffsprozedur auf die durch das Internetportal bereitgestellten Daten zugreift. Diese Daten sind dann die Daten, z.B. Musik-Clips, Video-Clips oder Computerspiele-Clips, über die Informationen von Datenträger-Produkten, die Werbespot-Daten, die statistischen Daten und Steuerdaten für die Präsentationen von Produkten im Produktpräsentationsbereich.

Gemäß einem weiteren Aspekt der Erfindung wird ein Verfahren zum Betreiben von Informationsterminals angegeben. Das Verfahren verwendet das vorgenannte System und zeigt die bereits im Zusammenhang mit dem System erläuterten Vorteile und technischen Wirkungen.

Ausführungsbeispiele der Erfindung werden im folgenden anhand der Zeichnung erläutert. Darin zeigt
- Figur 1: ein Blockschaltbild des lokalen Teils des gesamten Systems zum Betreiben von Informationsterminals,
- Figur 2: ein Blockschaltbild der Zentrale,
- Figur 3: ein Übersichtsbild in Form eines Blockdiagramms für einen Systemnutzer mit mehreren Fillialen,
- Figur 4: einen Teil eines Prototypen eines Informationsterminals mit einem Produktpräsentationsbereich,
- Figur 5: die Darstellung einer Internetseite mit einer Statistik über die Gesamtzahl von Kunden-Kontakten für ein Ladengeschäft,
- Figur 6: eine Internetseite mit einer Rangliste der von Kunden gewünschten Titel, und
- Figur 7: eine Wochenstatistik über die an verschiedenen Informationsterminals abgehörten CDs.

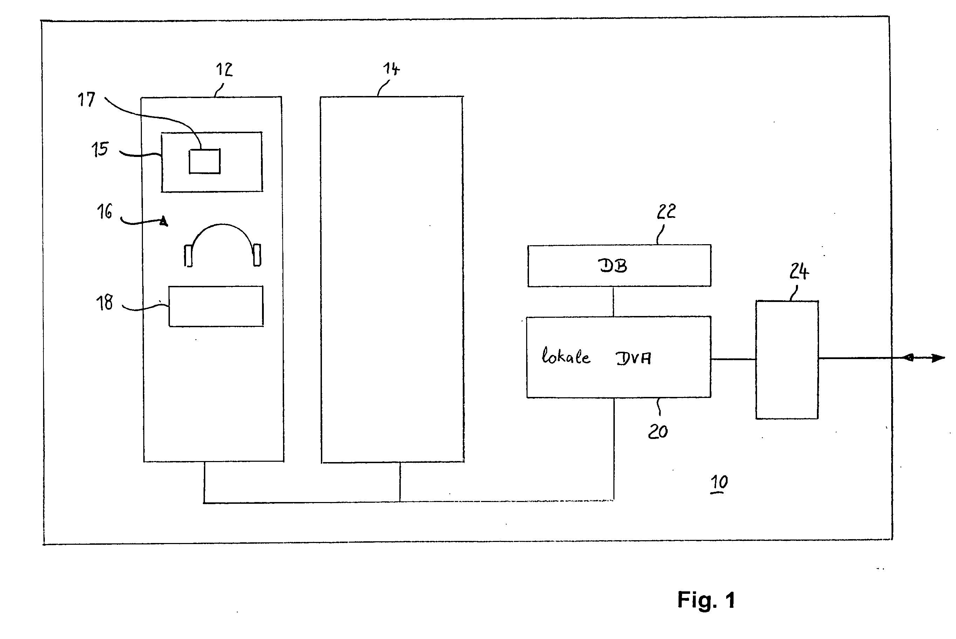

Figur 1 zeigt einen lokalen Teil 10 des Systems zum Betreiben von Informationsterminals. Der lokale Teil 10 enthält in diesem Beispiel zwei Informationsterminals 12 und 14, die jeweils gleichartig aufgebaut sind. Lediglich das Informationsterminal 12 ist näher dargestellt. Selbstverständlich kann der lokale Teil 10 eine sehr viel größere Zahl von Informationsterminals enthalten. Das Informationsterminal 12 hat eine Wiedergabestation 16 in Form eines Kopfhörers zum Probehören von CDs. Für den Fall, daß DVDs oder Computerspiele zur Probe gespielt werden sollen, hat die Wiedergabestation ein Videoabspielgerät, z.B. in Form eines Personal Computers mit Monitor, und entsprechende weitere Geräte. Weiterhin hat die Wiedergabestation Einstellvorrichtungen (nicht dargestellt) zum Einstellen der Lautstärke, zum Spurwechsel, zum Vorwärts- und Rückwärtsspulen und gegebenenfalls andere Betätigungselemente, beispielsweise Konsolen für Computerspiele. Weiterhin enthält das Informationsterminal 12 eine Abtastvorrichtung 18, mit deren Hilfe ein auf der Verpackung eines Datenträger-Produktes, einer CD, einer DVD oder eines Computerspiels, angebrachter Barcode als Produktkennzeichnung abgetastet wird. Im unmittelbaren Sicht- und Zugriffsbereich eines Kunden ist oberhalb der Wiedergabestation 16 ein Produktprästentationsbereich 15 mit einem oder mehreren Produkten 17 angeordnet.

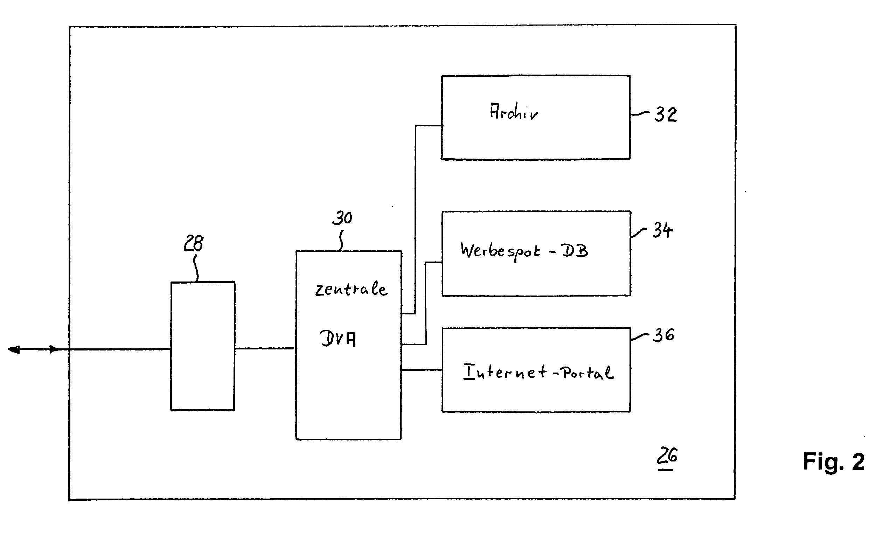

Beide Informationsterminals 12 und 14 sind mit einer lokalen Datenverarbeitungsanlage 20 verbunden, die wiederum Zugriff auf eine lokale Datenbank 22 hat. In dieser lokalen Datenbank 22 sind z.B. Daten von Musik-Clips oder Video-Clips gespeichert. Die lokale Datenverarbeitungsanlage 22 ist über eine Schnittstelle 24 zum IP-Netzwerk (Internet Protokoll) mit einer Zentrale verbunden, deren Aufbau schematisch in Figur 2 erläutert ist.

Figur 2 zeigt die Zentrale 26 als Blockschaltbild. Über eine Schnittstelle 28 zum IP-Netzwerk ist eine zentrale Datenverarbeitungsanlage 30 angeschlossen. Diese zentrale Datenverarbeitungsanlage 30 greift auf ein Archiv 32 in Form einer Datenbank zu, in der die Daten einer Vielzahl von Musik-Clips und Video-Clips und Daten über Computerspiele gespeichert sind, die den zu verkaufenden Datenträger-Produkten zugeordnet sind. Die Zahl von gespeicherten Stücken kann mehrere Millionen betragen.

Weiterhin greift die zentrale Datenverarbeitungsanlage 30 auf eine Werbespot-Datenbank 34 zu, in der Daten über Werbespots gespeichert sind. Diese Werbespots werden durch die Datenverarbeitungsanlage 30 verwaltet.

Als weiterer Block ist ein Internetportal 36 dargestellt, welches als Software den Internetzugang über die zentrale Datenverarbeitungsanlage 30 realisiert. Ein Systemnutzer benutzt dieses Internetportal 36, indem er über das weltweite IP-Netzwerk auf das Internetportal 36 zugreift, sich als zugriffsberechtigt identifiziert und über eine Menüführung im Internetportal 36 die für ihn notwendigen Daten holt und/oder einstellt und/oder Steuerfunktionen auslöst.

Das die Teile 10 und 26 umfassende Gesamtsystem arbeitet wie folgt. Ein Systemnutzer meldet sich über das Internetportal 36 an und lädt seine lokale Datenbank 22 im Online-Betrieb mit Informationen, z.B. Musik-Clip-Daten oder Video-Clip-Daten, aus dem Archiv 32. Diese Daten betreffen die im Verkaufsgeschäft des Systemnutzers bereitgehaltenen und zu verkaufenden Datenträger-Produkte. Das Auffrischen der lokalen Datenbank 22 mit aktuellen Daten aus dem Archiv 32 kann in regelmäßigen Zeitabständen oder automatisch erfolgen.

Ein Kunde im Verkaufsgeschäft des Systemnutzers greift aus einem Vorrat an Datenträger-Produkten, z.B. CDs oder DVDs, ein Datenträger-Produkt heraus und hält die Verpackung mit dem Etikett, auf dem ein Barcode aufgedruckt ist, unter die Abtastvorrichtung 18. Die Abtastvorrichtung 18 tastet den Barcode ab und übersendet die Information an die lokale Datenverarbeitungsanlage 20. Diese holt die zu diesem Produkt gehörenden Informationen aus der lokalen Datenbank 22, beispielsweise Audiodaten oder Videodaten. Diese Daten werden der Wiedergabestation 16 zugeführt. Der Nutzer kann über diese Wiedergabestation 16, z.B. ein Kopfhörer, das Datenträger-Produkt probehören und/oder probesehen.

Der Systemnutzer wählt weiterhin über die Zentrale 26 einen oder mehrere Werbespots aus der Werbespot-Datenbank 34 aus; die Daten hierfür werden der lokalen Datenverarbeitungsanlage 20 und der Datenbank 22 übergeben. Während der Kunde Informationen über das Datenträger-Produkt probehört oder probesieht, werden diese Werbespots eingespielt. Bei dem Probehören und Probesehen ist der Kunde an den Ort des Informationsterminals 12 gebunden. Seine Aufmerksamkeit wird auf den Produktpräsentationsbereich 15 gelenkt, in welchem das Produkt 17, beispielsweise ein oder mehrere Datenträger-Produkte präsentiert werden.

Bei einer Erstinstallation wird die lokale Datenbank 22 mit Daten gemäß einer Warenbestandsliste des betreffenden Verkaufslokals des Systemnutzers versorgt. Das danach erforderliche Aktualisieren (up-date) des Datenbestandes infolge der Änderung des Warenbestandes kann automatisch erfolgen, indem ein Kunde ein noch nicht im Datenbestand der lokalen Datenbank vorhandenes Datenträger-Produkt zum Informationsterminal 12, 14 bringt, das dort abgetastet wird. Die lokale Datenverarbeitungsanlage 20 erkennt, daß die erforderlichen Daten nicht vorliegen und fordert diese Daten via IP-Netzwerk von der Zentrale 26 an. Die Zentrale 26 veranlaßt dann, daß diese Daten von dem zentralen Archiv 32 über das IP-Netzwerk an die lokale Datenbank 22 gesendet und von dort an das Informationsterminal 12, 14 weitergegeben werden.

In einer anderen Variante der Erfindung kann auf die lokale Datenbank 22 verzichtet werden. Die Informationsterminals 12, 14 sind jeweils direkt mit der Zentrale 26 über das IP-Netzwerk verbunden und erhalten die erforderlichen Daten aus dem Archiv 32 oder der Werbespot-Datenbank 34 direkt oder über die lokale Datenverarbeitungsanlage 20. Die Steuerfunktion der lokalen Datenverarbeitungsanlage kann auch dem jeweiligen Informationsterminal zugeordnet sein, d.h. jedes Informationsterminal 12, 14 hat einen eigenen Computer. Vorzugsweise hat jedes Informationsterminal 12, 14 eine eigene IP-Adresse; über diese IP-Adresse kann es direkt mit der Zentrale kommunizieren. In einer anderen Variante sind mehrere Informationsterminals zu einer Gruppe verbunden, die eine eigene gruppenspezifische IP-Adresse hat.

In Verbindung mit den einzuspielenden Werbespots werden folgende Werbemaßnahmen bevorzugt, durchgeführt:
1. Werbemaßnahme "pre-listening"
   Es werden Werbeinformationen eingespielt, die auf ein Datenträger-Produkt hinweisen, was noch nicht auf dem Markt erhältlich ist, jedoch bereits vorab zur Probe angehört oder angesehen werden kann. Auf diese Weise wird die Neugier des Kunden für dieses Datenträger-Produkt geweckt.
2. Werbemaßnahme "Rotation"
   In Pausenzeiten zwischen dem Abspielen von Informationen über Datenträger-Produkte werden Werbespots automatisch abgespielt. Beispielsweise kann auch in der Pause beim Wechsel von zwei Stücken, z.B. Songs, ein Werbespot plaziert werden. Die Werbung kann auch zusätzlich auf Außenlautsprechern oder Videowänden erfolgen.
3. Werbemaßnahme "Intro"
   Bei dieser Werbemaßnahme wird jeweils vor dem Abspielen der Informationen für ein Datenträgerprodukt ein Werbespot als Einführung abgespielt. Zusätzlich kann im Produktpräsentationsbereich ein entsprechendes Produkt zur Verstärkung der Werbemaßnahme präsentiert werden, z.B. eine oder mehrere CDs.

Der Systemnutzer kann die Werbespots auch so auswählen, daß sie Informationen enthalten, die nicht im Zusammenhang mit einem Datenträger-Produkt stehen, die beispielsweise auf Elektrokleingeräte oder andere Produkte hinweisen. Weiterhin ist es möglich, daß der Werbespot allgemeine Informationen enthält und beispielsweise eine allgemeine Werbebotschaft über ein Unternehmen betrifft.

Vorzugsweise werden im Produktpräsentationsbereich 15 als Produkt 17 ein Datenträger-Produkt präsentiert, über das im Werbespot informiert wird. Nachdem der Kunde an den Ort des Informationsterminals 12 gebunden ist, ist seine Aufmerksamkeit auch auf das Produkt 17 im Produktpräsentationsbereich 15 gerichtet. Durch die Informationen im Werbespot über dieses Produkt wird die Werbung für dieses Produkt weiter verstärkt.

Wie weiter unten noch näher erläutert wird, kann der Systemnutzer über das Internetportal 36 statistische Daten über die Häufigkeit der Nutzung der Informationsterminals 12, 14 erhalten. Weiterhin kann er statistische Daten über die Häufigkeit der Nutzung bestimmter Datenträger-Produkte erhalten. Mithilfe dieser Informationen kann der Systemnutzer das zu präsentierende Datenträger-Produkt 17 im Produktpräsentationsbereich 15 festlegen und so seinen Verkauf fördern.

Die Informationsterminals 12, 14 können zum Vorteil für den Systemnutzer zu weiteren Werbeaktionen verwendet werden, wobei insbesondere die Abtastvorrichtung 18 genutzt wird. Beispielsweise kann als Datenträger-Produkt ein Werbeträger, z.B. eine Postkarte, verwendet werden, der einen Barcode trägt. Im Falle der Postkarte ist dann auf dieser ein Barcode aufgedruckt. Der Kunde, der dieses Datenträger-Produkt zu einem Informationsterminal 12 oder 14 bringt und dort abtasten läßt, wird mithilfe von zuvor festgelegten Informationen über die Wiedergabestation 16 informiert. Die Informationen können z.B. durch das Archiv 32 und/oder die Werbespot-Datenbank 34 und/oder die lokale Datenbank 22 bereitgestellt werden. Beispielsweise bei einer Lockvogel-Werbemaßnahme wird dem Kunden eine Postkarte mit einem Gewinnversprechen, z.B. im Losverfahren, zugeschickt. Der Kunde kommt mit dieser Postkarte in das Ladenlokal des Systemnutzers; am Informationsterminal 12 oder 14 wird der auf der Postkarte aufgebrachte Barcode abgetastet und der Kunde über dieses Datenträger-Produkt informiert und mit Werbespots versorgt.

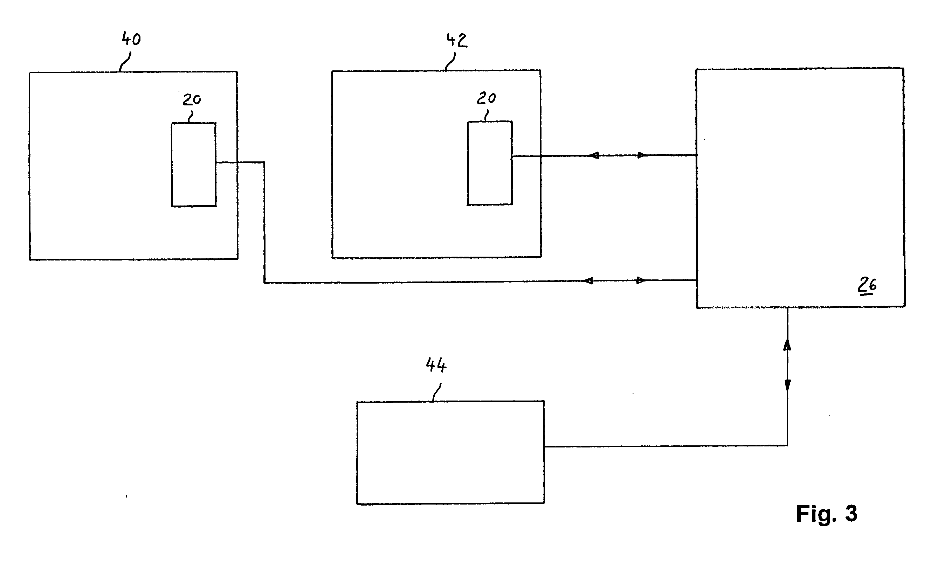

In Figur 3 sind in einer schematischen Blockdarstellung Filialen 40, 42 eines Systemnutzers dargestellt. Jede Filiale 40, 42 enthält eine lokale Datenverarbeitungsanlage 20, die jeweils mit der Zentrale 26 verbunden ist. Der Systemnutzer kann über ein IP-Terminal 44, das sich typischerweise in einer der Filialen 40, 42 befindet, jedoch auch an einem beliebigen Ort vorhanden sein kann, auf das Internetportal 36 der Zentrale 26 zugreifen. Auf diese Weise kann ein Systemnutzer über die Zentrale 26 die in den verschiedenen Fillialen 40, 42 vorhandenen Informationsterminals steuern und sie mit Informationen und Werbespots über die Zentrale 26 versorgen. Es ist auch zweckmäßig, mehrere Informationsterminals zu einer Gruppe zusammenzufassen, und diese Gruppe mit gleichen Daten zu versorgen. Auch können die Informationsterminals Filiale für Filiale getrennt oder gemeinsam angesteuert werden. Weiterhin ist es möglich, daß die verschiedenen Informationsterminals oder Gruppen davon mit entsprechenden lokalen Steuerungen über das IP-Netzwerk jeweils direkt mit der Zentrale 26 verbunden sind.

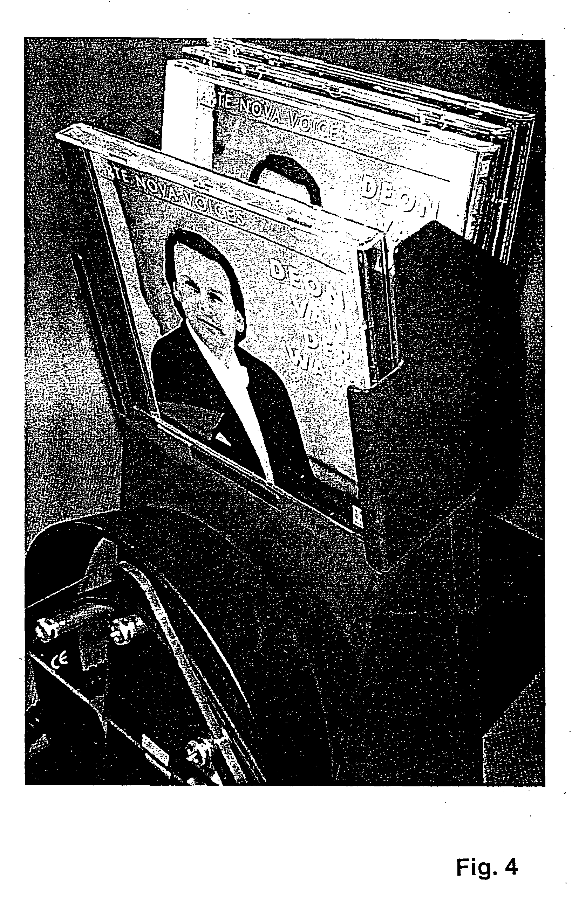

Figur 4 zeigt einen Teil eines Prototyps eines Informationsterminals. Im oberen Bereich der Figur 4 ist der Produktpräsentationsbereich zu erkennen, in welchem vier CDs als Datenträger-Produkte präsentiert werden. Im linken unteren Bildteil ist ein Kopfhörer als Wiedergabestation zu erkennen. Wie leicht zu erkennen ist, ist der Produktpräsentationsbereich in unmittelbarer Nähe und im direkten sichtbaren Zugriffsbereich des Kunden angeordnet, wenn dieser den Kopfhörer zum Probehören aufsetzt.

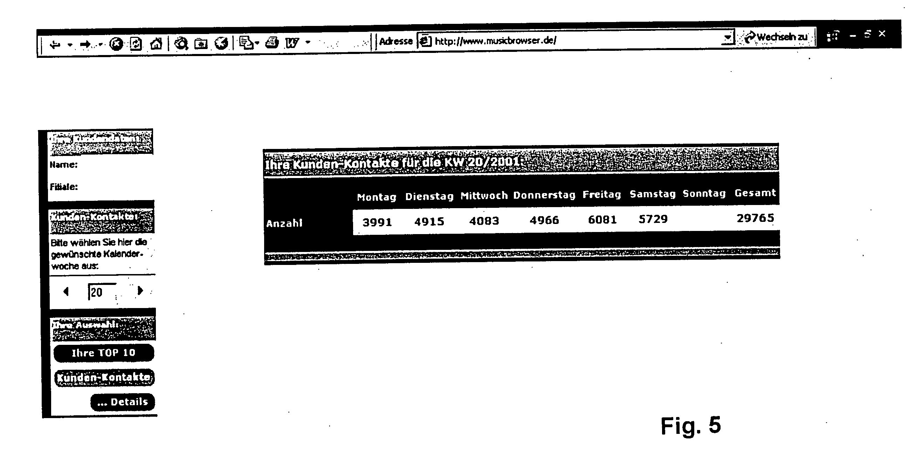

Figur 5 zeigt die Darstellung einer Internetseite, auf die ein Systemnutzer zugreifen kann. Auf dieser Internetseite werden dem Systemnutzer statistische Daten über die Kundenkontakte für die 20. Kalenderwoche in einer Tagesübersicht dargestellt. Im linken Bildteil der Internetseite ist zu erkennen, daß der Systemnutzer eine Menüführung erhält.

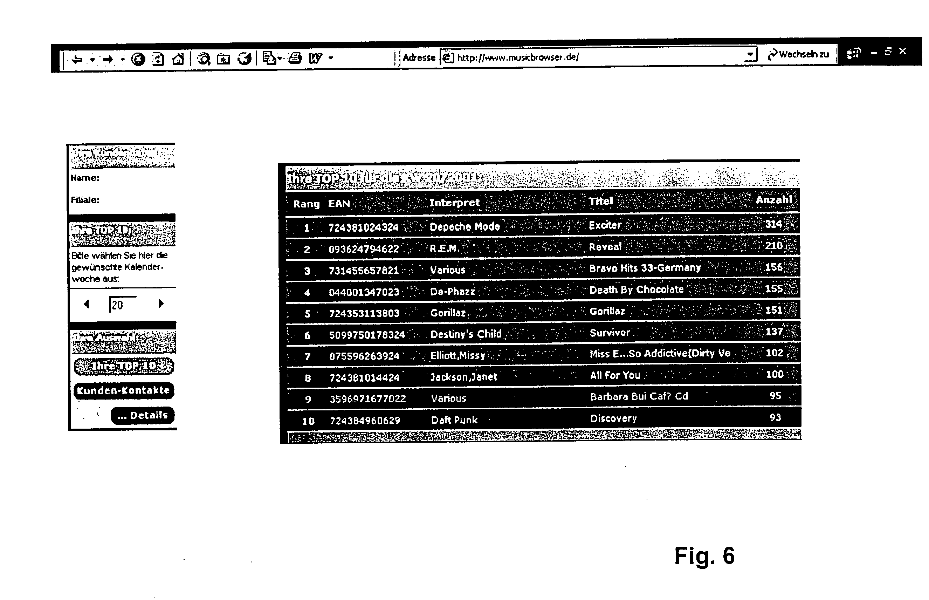

Figur 6 zeigt eine Internetseite mit einer Rangliste der von Kunden abgespielten Musikstücke. Der Systemnutzer kann anhand dieser Rangliste seine Produktpräsentation und seine Werbespots einstellen bzw. verändern.

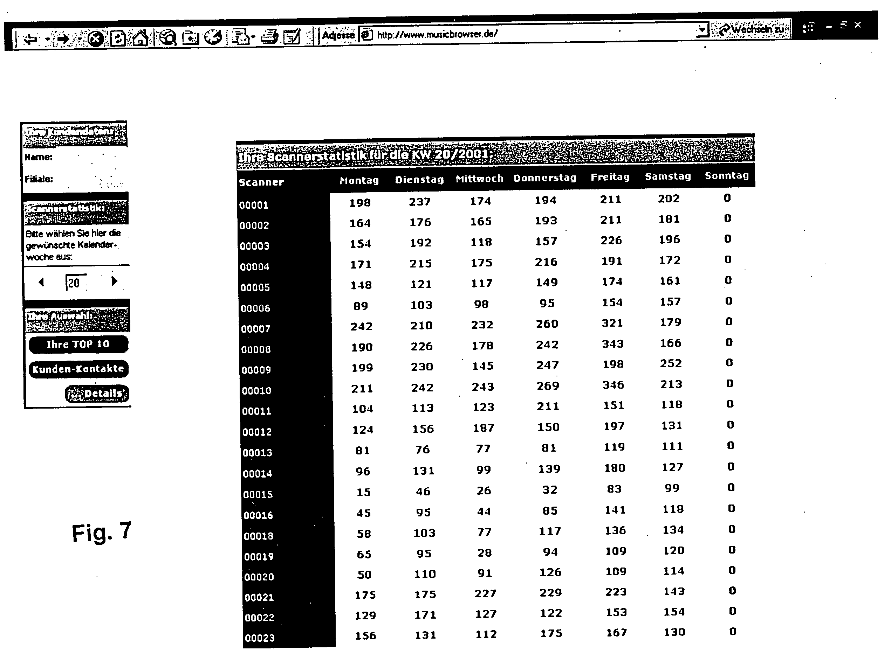

Figur 7 zeigt eine detaillierte Übersicht der abgetasteten Datenträger-Produkte an verschiedenen Informationsterminals in einem Wochenüberblick.

### Bezugszeichenliste

- 10: lokaler Teil des Systems
- 12, 14: Informationsterminals
- 15: Produktpräsentationsbereich
- 16: Wiedergabestation
- 17: Produkt
- 18: Abtastvorrichtung
- 20: lokale Datenverarbeitungsanlage
- 22: lokale Datenbank
- 24: Schnittstelle zum IP-Netzwerk
- 26: Zentrale des Systems
- 28: Schnittstelle zum IP-Netzwerk
- 30: zentrale Datenverarbeitungsanlage
- 32: Archiv
- 34: Werbespotdatenbank
- 36: Internetportal
- 40, 42: Filialen
- 44: IP-Terminal

## Patentansprüche

1. System zum Betreiben von Informationsterminals,
bei dem ein Systemnutzer eine Vielzahl von Informationsterminals (12, 14) für Kunden bereitstellt,
jedes Informationsterminal eine Wiedergabestation (16) zur akustischen und/oder optischen Wiedergabe mindestens eines Teils von Informationen hat, die auf einem zum Kauf bestimmten Datenträger-Produkt (CD, DVD, Computerspiel) gespeichert sind,
jedes Informationsterminal (12, 14) weiterhin eine Abtastvorrichtung (18) hat, die eine auf dem Datenträger-Produkt angebrachte Produktkennzeichnung abtastet,
eine beim Systemnutzer vorhandene lokale Steuerung (20) aufgrund der abgetasteten Produktkennzeichnung die für die Wiedergabe an der Wiedergabestation (16) für den Kunden bestimmten Informationen anfordert, die diese Wiedergabestation (16) an den Kunden abgibt,
eine vom Systemnutzer entfernte Zentrale (26) eine zentrale Datenverarbeitungsanlage (30) hat, die mit der lokalen Steuerung (20) verbindbar ist und die die zur Wiedergabe bestimmten Informationen aus einem Archiv (32) liefert, die Daten einer Vielzahl von Datenträger-Produkten enthält,
und bei dem für die lokale Steuerung (20) Daten für mindestens einen Werbespot bereitgestellt werden, der an der Wiedergabestation (16) des Informationsterminals (12, 14) an den Kunden zusätzlich zur Information über das Datenträger-Produkt ausgegeben wird.

2. System nach Anspruch 1, **dadurch gekennzeichnet, daß** die lokale Steuerung (20) mit einer lokalen Datenbank (22) verbunden ist, die die Daten für die Informationen über die Datenträger-Produkte und Werbespots speichert.

3. System nach Anspruch 1 oder 2, **dadurch gekennzeichnet, daß** die lokale Steuerung (20) über ein IP-Netzwerk mit der zentralen Datenverarbeitungsanlage (30) verbunden ist und die Daten über dieses IP-Netzwerk ausgetauscht werden.

4. System nach einem der vorhergehenden Ansprüche, **dadurch gekennzeichnet, daß** die Zentrale (26) eine Werbespot-Datenbank (34) enthält, in der eine Vielzahl von Werbespots gespeichert sind, und
daß der Systemnutzer mindestens einen Werbespot auswählt, der der lokalen Steuerung (20) übermittelt und von der Wiedergabestation (16) ausgegeben wird.

5. System nach Anspruch 4, **dadurch gekennzeichnet, daß** der Systemnutzer der zentralen Werbespot-Datenbank (34) einen Werbespot übermittelt, der in der Werbespot-Datenbank (34) softwaretechnisch verwaltet wird.

6. System nach einem der vorhergehenden Ansprüche, **dadurch gekennzeichnet, daß** die von der Abtastvorrichtung (18) ermittelten Daten statistisch ausgewertet werden.

7. System nach Anspruch 6, **dadurch gekennzeichnet, daß** die Statistik die Häufigkeit abgetasteter Datenträger-Produkte wiedergibt.

8. System nach Anspruch 7, **dadurch gekennzeichnet, daß** die Statistik je Zeitabschnitt, vorzugsweise eine Woche, eine Rangliste der verschiedenen Datenträger-Produkte angibt.

9. System nach einem der vorhergehenden Ansprüche, **dadurch gekennzeichnet, daß** die zentrale Datenverarbeitungsanlage (30) die statistischen Daten enthält und aufbereitet, und daß der Systemnutzer diese statistischen Daten über die zentrale Datenverarbeitungsanlage abrufen kann.

10. System nach einem der vorhergehenden Ansprüche, **dadurch gekennzeichnet, daß** das Informationsterminal (12, 14) einen Produktpräsentationsbereich (15) hat, der im Zugriffsbereich des Kunden bei der Wiedergabe der akustischen und/oder optischen Informationen auf der Wiedergabestation (18) liegt,
und daß im Produktpräsentationsbereich (15) mindestens ein Produkt (17) präsentiert wird.

11. System nach Anspruch 10, **dadurch gekennzeichnet, daß** im Produktpräsentationsbereich (17) mindestens ein Datenträger-Produkt präsentiert wird.

12. System nach einem der vorhergehenden Ansprüche, **dadurch gekennzeichnet, daß** der von der Wiedergabestation (18) wiedergegebene Werbespot das im Produktpräsentationsbereich (15) präsentierte Produkt (17) betrifft.

13. System nach einem der vorhergehende Ansprüche, **dadurch gekennzeichnet, daß** der Werbespot Informationen enthält, die auf ein bestimmtes Datenträger-Produkt hinweisen.

14. System nach einem der vorhergehenden Ansprüche, **dadurch gekennzeichnet, daß** der Werbespot Informationen enthält, die auf ein demnächst zum Verkauf angebotenes Datenträger-Produkt hinweist.

15. System nach einem der vorhergehenden Ansprüche, **dadurch gekennzeichnet, daß** der Werbespot Informationen enthält, die nicht im Zusammenhang mit einem Datenträger-Produkt stehen.

16. System nach einem der vorhergehenden Ansprüche, **dadurch gekennzeichnet, daß** der Systemnutzer das an einem oder mehreren Informationsterminals im jeweiligen Produktpräsentationsbereich (15) zu präsentierende Datenträger-Produkt (17) abhängig von den statistischen Daten festlegt.

17. System nach Anspruch 16, **dadurch gekennzeichnet, daß** diese statistischen Daten an vorbestimmten Informationsterminals ermittelt werden.

18. System nach einem der vorhergehenden Ansprüche, **dadurch gekennzeichnet, daß** der Systemnutzer in mehreren örtlich voneinander entfernten Filialen (40, 42) Informationsterminals verwaltet,
daß jedes Informationsterminal über die zentrale Datenverarbeitungsanlage (30) ansteuerbar ist,
und daß der Systemnutzer durch Zugriff auf die zentrale Datenverarbeitungsanlage (30) die Einspielung von Werbespots steuert.

19. System nach Anspruch 18, **dadurch gekennzeichnet, daß** der Systemnutzer durch Zugriff auf die zentrale Datenverarbeitungsanlage (30) die Präsentation von Produkten (17) im Produktpräsentationsbereich (15) steuert.

20. System nach einem der vorhergehenden Ansprüche, **dadurch gekennzeichnet, daß** die zentrale Datenverarbeitungsanlage ein Internetportal (36) umfaßt,
und daß der Systemnutzer via Internet mithilfe einer ihn identifizierende Zugriffsprozedur auf die durch das Internetportal (36) bereitgestellten Daten zugreift.

21. System nach einem der vorhergehenden Ansprüche, **dadurch gekennzeichnet, daß** das Datenträger-Produkt eine CD, eine DVD oder ein Computerspiel ist.

22. System nach einem der vorhergehenden Ansprüche, **dadurch gekennzeichnet, daß** das Datenträger-Produkt ein Werbeträger mit einem Barcode ist.

23. System nach einem der vorhergehenden Ansprüche, **dadurch gekennzeichnet, daß** mehrere Informationsterminals gruppenweise zusammengefaßt sind, und daß die Einspielung von Werbespots gruppenweise erfolgt.

24. System nach Anspruch 23, **dadurch gekennzeichnet, daß** jede Gruppe mindestens eine computergestützte Steuerung und eine IP-Adresse hat, unter der die Datenkommunikation mit der Zentrale direkt abgewickelt wird.

25. System nach einem der vorhergehenden Ansprüche, **dadurch gekennzeichnet, daß** jedes Informationsterminal eine computergestützte Steuerung enthält, und daß jedes Informationsterminal eine IP-Adresse hat, unter der es in direkter Datenverbindung mit der Zentrale steht.

26. Verfahren zum Betreiben von Informationsterminals,
bei dem ein Systemnutzer eine Vielzahl von Informationsterminals (12, 14) für Kunden bereitstellt,
jedes Informationsterminal eine Wiedergabestation (16) zur akustischen und/oder optischen Wiedergabe mindestens eines Teils von Informationen hat, die auf einem zum Kauf bestimmten Datenträger-Produkt (CD, DVD, Computerspiel) gespeichert sind,
jedes Informationsterminal (12, 14) weiterhin eine Abtastvorrichtung (18) hat, die eine auf dem Datenträger-Produkt angebrachte Produktkennzeichnung abtastet,
eine beim Systemnutzer vorhandene lokale Steuerung (20) aufgrund der abgetasteten Produktkennzeichnung die für die Wiedergabe an der Wiedergabestation (16) für den Kunden bestimmten Informationen anfordert, die diese Wiedergabestation (16) an den Kunden abgibt,
eine vom Systemnutzer entfernte Zentrale (26) eine zentrale Datenverarbeitungsanlage (30) hat, die mit der lokalen Steuerung (20) verbindbar ist und die die zur Wiedergabe bestimmten Informationen aus einem Archiv (32) liefert, die Daten einer Vielzahl von Datenträger-Produkten enthält,
und bei dem für die lokale Steuerung (20) Daten für mindestens einen Werbespot bereitgestellt werden, der an der Wiedergabestation (16) des Informationsterminals (12, 14) an den Kunden zusätzlich zur Information über das Datenträger-Produkt ausgegeben wird.

27. Verfahren nach Anspruch 26, **dadurch gekennzeichnet, daß** die lokale Steuerung (20) mit einer lokalen Datenbank (22) verbunden ist, die die Daten für die Informationen über die Datenträger-Produkte und Werbespots speichert.

28. Verfahren nach Anspruch 26 oder 27, **dadurch gekennzeichnet, daß** die lokale Steuerung (20) über ein IP-Netzwerk mit der zentralen Datenverarbeitungsanlage (30) verbunden ist und die Daten über dieses IP-Netzwerk ausgetauscht werden.

29. Verfahren nach einem der vorhergehenden Ansprüche, **dadurch gekennzeichnet, daß** die Zentrale (26) eine Werbespot-Datenbank (34) enthält, in der eine Vielzahl von Werbespots gespeichert sind, und
daß der Systemnutzer mindestens einen Werbespot auswählt, der der lokalen Steuerung (20) übermittelt und von der Wiedergabestation (16) ausgegeben wird.

30. Verfahren nach Anspruch 29, **dadurch gekennzeichnet, daß** der Systemnutzer der zentralen Werbespot-Datenbank (34) einen Werbespot übermittelt, der in der Werbespot-Datenbank (34) softwaretechnisch verwaltet wird.

31. Verfahren nach einem der vorhergehenden Ansprüche, **dadurch gekennzeichnet, daß** die von der Abtastvorrichtung (18) ermittelten Daten statistisch ausgewertet werden.

32. Verfahren nach Anspruch 31, **dadurch gekennzeichnet, daß** die Statistik die Häufigkeit abgetasteter Datenträger-Produkte wiedergibt.

33. Verfahren nach Anspruch 32, **dadurch gekennzeichnet, daß** die Statistik je Zeitabschnitt, vorzugsweise eine Woche, eine Rangliste der verschiedenen Datenträger-Produkte angibt.

34. Verfahren nach einem der vorhergehenden Ansprüche, **dadurch gekennzeichnet, daß** die zentrale Datenverarbeitungsanlage (30) die statistischen Daten enthält und aufbereitet, und daß der Systemnutzer diese statistischen Daten über die zentrale Datenverarbeitungsanlage abrufen kann.

35. Verfahren nach einem der vorhergehenden Ansprüche, **dadurch gekennzeichnet, daß** das Informationsterminal (12, 14) einen Produktpräsentationsbereich (15) hat, der im Zugriffsbereich des Kunden bei der Wiedergabe der akustischen und/oder optischen Informationen auf der Wiedergabestation (18) liegt,
und daß im Produktpräsentationsbereich (15) mindestens ein Produkt (17) präsentiert wird.

36. Verfahren nach Anspruch 35, **dadurch gekennzeichnet, daß** im Produktpräsentationsbereich (17) mindestens ein Datenträger-Produkt präsentiert wird.

37. Verfahren nach einem der vorhergehenden Ansprüche, **dadurch gekennzeichnet, daß** der von der Wiedergabestation (18) wiedergegebene Werbespot das im Produktpräsentationsbereich (15) präsentierte Produkt (17) betrifft.

38. Verfahren nach einem der vorhergehende Ansprüche, **dadurch gekennzeichnet, daß** der Werbespot Informationen enthält, die auf ein bestimmtes Datenträger-Produkt hinweisen.

39. Verfahren nach einem der vorhergehenden Ansprüche, **dadurch gekennzeichnet, daß** der Werbespot Informationen enthält, die auf ein demnächst zum Verkauf angebotenes Datenträger-Produkt hinweist.

40. Verfahren nach einem der vorhergehenden Ansprüche, **dadurch gekennzeichnet, daß** der Werbespot Informationen enthält, die nicht im Zusammenhang mit einem Datenträger-Produkt stehen.

41. Verfahren nach einem der vorhergehenden Ansprüche, **dadurch gekennzeichnet, daß** der Systemnutzer das an einem oder mehreren Informationsterminals im jeweiligen Produktpräsentationsbereich (15) zu präsentierende Datenträger-Produkt (17) abhängig von den statistischen Daten festlegt.

42. Verfahren nach Anspruch 41, **dadurch gekennzeichnet, daß** diese statistischen Daten an vorbestimmten Informationsterminals ermittelt werden.

43. Verfahren nach einem der vorhergehenden Ansprüche, **dadurch gekennzeichnet, daß** der Systemnutzer in mehreren örtlich voneinander entfernten Filialen (40, 42) Informationsterminals verwaltet,
daß jedes Informationsterminal über die zentrale Datenverarbeitungsanlage (30) ansteuerbar ist,
und daß der Systemnutzer durch Zugriff auf die zentrale Datenverarbeitungsanlage (30) die Einspielung von Werbespots steuert.

44. Verfahren nach Anspruch 43, **dadurch gekennzeichnet, daß** der Systemnutzer durch Zugriff auf die zentrale Datenverarbeitungsanlage (30) die Präsentation von Produkten (17) im Produktpräsentationsbereich (15) steuert.

45. Verfahren nach einem der vorhergehenden Ansprüche, **dadurch gekennzeichnet, daß** die zentrale Datenverarbeitungsanlage ein Internetportal (36) umfaßt,
und daß der Systemnutzer via Internet mithilfe einer ihn identifizierende Zugriffsprozedur auf die durch das Internetportal (36) bereitgestellten Daten zugreift.

46. Verfahren nach einem der vorhergehenden Ansprüche, **dadurch gekennzeichnet, daß** das Datenträger-Produkt eine CD, eine DVD oder ein Computerspiel ist.

47. Verfahren nach einem der vorhergehenden Ansprüche, **dadurch gekennzeichnet, daß** das Datenträger-Produkt ein Werbeträger mit einem Barcode ist.

48. Verfahren nach einem der vorhergehenden Ansprüche, **dadurch gekennzeichnet, daß** mehrere Informationsterminals gruppenweise zusammengefaßt sind, und daß die Einspielung von Werbespots gruppenweise erfolgt.

49. Verfahren nach Anspruch 48, **dadurch gekennzeichnet, daß** jede Gruppe mindestens eine computergestützte Steuerung und eine IP-Adresse hat, unter der die Datenkommunikation mit der Zentrale direkt abgewickelt wird.

50. Verfahren nach einem der vorhergehenden Ansprüche, **dadurch gekennzeichnet, daß** jedes Informationsterminal eine computergestützte Steuerung enthält, und daß jedes Informationsterminal eine IP-Adresse hat, unter der es in direkter Datenverbindung mit der Zentrale steht.
